# FASCICULE DE BREVET EUROPEEN

(11) **EP 3 502 949 B1**
(45) Date de publication et mention de la délivrance du brevet: **21.09.2022**
(21) Numéro de dépôt: 18213869.3
(22) Date de dépôt: 19.12.2018
(51) Int. Cl.: G06F 9/48, G06F 21/52, G06F 21/62

(54) **PROCÉDÉ ET SYSTÈME DE CONTRÔLE D'ORDONNANCEMENT DE TÂCHES LOGICIELLES**
VERFAHREN UND SYSTEM ZUR ÜBERWACHUNG DER VERLAUFSPLANUNG VON SOFTWAREAUFGABEN
METHOD AND SYSTEM FOR CONTROLLING THE SCHEDULING OF SOFTWARE TASKS

(30) Priorité: 20.12.2017 FR 1701331
(43) Date de publication de la demande: 26.06.2019
(73) Titulaire: Thales, 92400 Courbevoie (FR)
(72) Inventeur: MACE, Gaël, 49309 CHOLET (FR); MAUSSION, Antoine, 49309 CHOLET (FR); VASLIN, Romain, 49309 CHOLET (FR)
(74) Mandataire: Lavoix

(56) Documents cités:
- US-A1- 2008 222 640
- US-A1- 2012 304 183
- "PORTABLE REAL-TIME SCHEDULER", IBM TECHNICAL DISCLOSURE BULLETIN, INTERNATIONAL BUSINESS MACHINES CORP. (THORNWOOD), US, vol. 34, no. 10A, mars 1992 (1992-03), pages 216-218, XP000302282, ISSN: 0018-8689

## Description

La présente invention concerne un procédé de contrôle d'ordonnancement de tâches logicielles à exécuter dans un contexte applicatif prédéterminé, et un système associé.

L'invention se situe dans le domaine de la sécurité des logiciels, et en particulier des services de sécurité réalisés par logiciel.

L'invention s'applique notamment pour la sécurisation des applications logicielles exécutées sur des dispositifs embarqués sensibles, qu'il s'agisse de dispositifs de communication, par exemple une radio logicielle, ou des dispositifs de commande ou de pilotage.

L'invention s'applique également dans le domaine du contrôle commande industriel, et plus généralement dans tout système fermé mettant en œuvre des logiciels prédéterminés, dans un contexte applicatif prédéterminé, pour lesquels un niveau élevé de sécurité d'exécution est nécessaire.

De manière connue, un dispositif de calcul, en particulier un dispositif embarqué, comprend des ressources matérielles (ou « hardware » en anglais) qui sont gérées par un système d'exploitation qui comprend un noyau exécutable en mode privilégié. On entend par « mode privilégié » l'anneau de protection de l'architecture d'un processeur, tel que défini dans l'encyclopédie en ligne Wikipedia, à partir duquel est autorisée la configuration des accès aux ressources matérielles.

Toute application logicielle (« software » en anglais), également appelée service, est implémentée par des instructions logicielles, c'est-à-dire des instructions de code de programme exécutable, l'exécution par les ressources matérielles étant supportée par le système d'exploitation. Les applications logicielles sont exécutées en « mode non privilégié », c'est-à-dire dans un anneau de protection où elles ne sont pas autorisées à modifier la configuration des accès aux ressources matérielles du dispositif de calcul.

Chaque application logicielle est en général constituée de plusieurs tâches à effectuer, et un contexte applicatif comporte plusieurs applications logicielles, pouvant s'exécuter de façon concurrente.

Le document US2012304183A1 décrit une allocation dynamique de tâches dans un système multi-core, pour éviter le cas d'accès concurrents à une même ressource partagée.

Dans un environnement d'exécution fermé, pour un contexte applicatif donné, un nombre dénombrable de services est proposé, et par conséquent un nombre dénombrable de tâches logicielles.

Dans une telle situation, notamment lorsque certaines tâches logicielles, par exemple des tâches logicielles relatives à l'authentification ou au traitement de données confidentielles, sont effectuées de manière concurrente ou successive, il est nécessaire de contrôler et de sécuriser l'ordonnancement des tâches.

Il est par exemple envisageable de rajouter une application logicielle spécifique liée à un tel contrôle, mais un contrôle au niveau des applications logicielles est complexe et peu sécurisé, car les applications logicielles qui s'exécutent en mode non privilégié représentent un volume d'instructions logicielles à valider trop important pour être appréhendé en vue d'atteindre un haut niveau de confiance.

Il existe donc un besoin d'améliorer la sécurité d'ordonnancement et d'exécution de tâches logicielles dans un contexte applicatif donné.

A cet effet, l'invention propose, selon un premier aspect, un procédé de contrôle d'ordonnancement de tâches logicielles à exécuter selon la revendication 1.

Avantageusement, le contrôle d'ordonnancement est mis en œuvre par le noyau du système d'exploitation, donc s'exécute sur un périmètre d'instructions logicielles réduit et en mode privilégié, en fonction d'une structure de configuration préalablement mémorisée. Ainsi, la sécurité d'ordonnancement et d'exécution des tâches logicielles est augmentée.

Le procédé de contrôle selon l'invention peut présenter une ou plusieurs des caractéristiques des revendications dépendantes 2 à 6, prises indépendamment ou en combinaison, selon toutes les combinaisons techniquement acceptables.

L'invention concerne également, selon un autre aspect, un système de contrôle d'ordonnancement de tâches logicielles à exécuter conforme à la revendication 7.

Selon un mode de réalisation, la structure de configuration est enregistrée préalablement à l'exécution d'une quelconque desdites tâches logicielles, dans une portion de mémoire protégée et non accessible.

Selon un mode de réalisation, le système comporte une pluralité de structures de configuration mémorisées, chaque structure de configuration correspondant à un contexte applicatif.

D'autres caractéristiques et avantages de l'invention ressortiront de la description qui en est donnée ci-dessous, à titre indicatif et nullement limitatif, en référence aux figures annexées, parmi lesquelles :
- la figure 1 est un bloc-diagramme des principaux blocs matériels et logiciels d'un dispositif de calcul mettant en œuvre l'invention selon un mode de réalisation ;
- la figure 2 illustre schématiquement des applications logicielles comprenant plusieurs tâches logicielles ;
- la figure 3 illustre schématiquement un enchaînement chronologique des tâches et un niveau de priorité associé ;
- la figure 4 est un ordinogramme des principales étapes d'un procédé d'ordonnancement de tâches selon un mode de réalisation ;
- la figure 5 représente schématiquement un exemple de structure de configuration mémorisée dans un mode de réalisation de l'invention ;
- la figure 6 représente un exemple de matrice de contrôle des tâches logicielles en fonction des états selon un mode de réalisation ;
- la figure 7 est un exemple de graphe de transition d'états selon un mode de réalisation ;
- la figure 8 est un exemple de matrice représentant un graphe de transition d'états ;
- la figure 9 est un ordinogramme des principales sous-étapes de l'exécution d'une tâche courante dans un mode de réalisation de communication entre tâches.

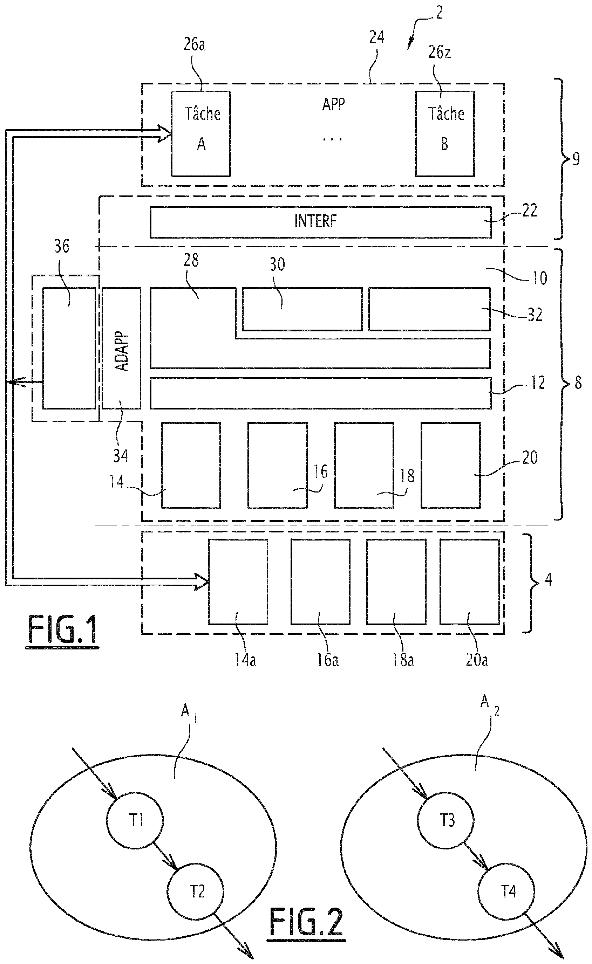

La figure 1 illustre schématiquement un système 2 matériel et logiciel mis en œuvre dans un dispositif de calcul selon un mode de réalisation de l'invention.

Le système 2 comporte un ensemble 4 de ressources matérielles ou « hardware » en anglais, constitué dans cet exemple de plusieurs blocs matériels, et plusieurs ensembles de blocs logiciels 8, 9.

Les ressources matérielles comprennent un processeur de calcul CPU (pour *« Central Processing Unit »* en anglais) 14a, un gestionnaire de mémoire virtuelle 16a appelé MMU pour « *Memory Management Unit* » en anglais, un module de gestion des interruptions 18a et, un générateur d'horloge 20a utilisé notamment pour la détection de blocage du système.

Les ressources matérielles 4 sont contrôlées par un système d'exploitation 8, qui comporte divers blocs fonctionnels d'instructions de code de contrôle « *hardware »,* également connus sous le noms de pilotes (« *drivers* » en anglais), exécutés dans le mode d'exécution dit privilégié.

Le système d'exploitation est par exemple un système de type Linux, ou VxWorks^{®} ou QNX ^{®}, enrichi par des fonctionnalités de contrôle d'ordonnancement des tâches logicielles selon les divers modes de réalisation de l'invention.

Ce système 8 comporte un noyau ou tronc commun 10, qui comporte une interface 12 bas niveau, également appelée interface HAL pour « Hardware Abstract Layer » qui permet d'interfacer les commandes du noyau 10 avec des modules pilotes 14 à 20 adaptés à contrôler directement les ressources matérielles 14a à 20a.

Ces modules pilotes adaptés à contrôler directement les ressources matérielles comprennent un contrôleur 14 du processeur de calcul, un contrôleur 16 de gestionnaire de mémoire virtuelle, un module 18 de gestion des interruptions et, optionnellement, un module de vérification 20 également connu sous le nom de « *Watchdog* » en anglais.

Le noyau 10 comporte également une interface 22 haut niveau, adaptée à supporter l'exécution d'applications logicielles 24. La ou les applications logicielles comportent une pluralité de tâches logicielles 26a à 26z. Chaque tâche est implémentée sous forme d'instructions de code de programme, dans un langage donné, compilé pour être exécutable par les ressources matérielles du dispositif de calcul grâce à l'interface 22.

L'interface haut niveau 22 et les tâches logicielles 24 font partie des applications logicielles 9 qui sont exécutées en mode non privilégié.

L'exécution d'une tâche logicielle met en œuvre, de manière connue, des calculs effectués par le processeur 14a, des données et paramètres mémorisés en utilisant par exemple le module gestionnaire de mémoire virtuelle 16a.

Le noyau 10 est configuré pour gérer l'ordonnancement d'exécution des tâches logicielles, notamment lorsque plusieurs tâches logicielles sont concurrentes, c'est-à-dire doivent être exécutées simultanément.

Il est entendu qu'en général, le système logiciel et matériel supporte un certain niveau de parallélisme d'exécution de tâches, mais pour simplifier l'explication, nous considérerons dans ce qui suit l'exemple de tâches logicielles concurrentes faisant appel aux mêmes ressources, pour lesquelles l'exécution en parallèle n'est pas envisagée.

Pour la gestion de l'ordonnancement et de l'exécution des tâches logicielles, le noyau 10 comporte un module ordonnanceur 28, un module de gestion des communications entre tâches 30 et un module 32 de contrôle de l'état global.

Le module 32 utilise une structure de configuration 36 qui comprend, pour un contexte applicatif donné, un ensemble de données mémorisées comme expliqué ci-après.

Un contexte applicatif est un ensemble dénombrable d'applications logicielles à exécuter, chaque application logicielle mettant en œuvre une ou plusieurs tâches logicielles.

Dans un système d'exécution fermé, par exemple dans un dispositif de calcul embarqué, un ou plusieurs contextes applicatifs sont prédéfinis.

Ainsi, pour chaque contexte applicatif, les tâches logicielles associées à ce contexte applicatif sont connues et dénombrables.

Un contexte applicatif (ou une application) est définissable sous forme d'automate, des paramètres permettant de caractériser chaque état de cet automate, des transitions étant définies entre les états de l'automate, qu'on peut représenter par un graphe d'états.

Un état global est défini, pour un contexte applicatif donné, par un ensemble de tâches autorisées et des paramètres associés.

Pour un contexte applicatif donné, on distingue plusieurs états globaux, un graphe d'états permettant de montrer les transitions autorisées entre états globaux. Dans la suite de la description, on utilise les termes « état global » et « état » indifféremment.

Les tâches autorisées varient d'un état du graphe à un autre. Le passage d'un état à un autre est réalisé sur demande d'une tâche autorisée à modifier l'état courant.

Par exemple, dans un mode de réalisation, un premier état global correspond à l'ensemble des services autorisés en mode authentifié, donc suite à une authentification réussie de l'utilisateur du système, et un deuxième état global correspond à l'ensemble des services autorisés en mode non authentifié, qui est un mode par défaut.

Le nombre total d'états globaux possibles du système logiciel est prédéterminé.

Une structure de configuration des tâches et des états globaux est mémorisée, comme expliqué en détail ci-après.

La structure de configuration mémorise les tâches logicielles des applications logicielles et les états globaux d'un contexte applicatif donné.

Pour chaque tâche, la structure de configuration mémorise notamment un niveau de priorité associé à la tâche. Pour chaque état, la structure de configuration mémorise notamment la liste des tâches autorisées dans cet état.

Le système comprend également une interface d'adaptation 34 permettant d'adapter le système à un contexte applicatif donné. Ainsi, plusieurs contextes applicatifs peuvent être mis en œuvre par un même dispositif.

L'interface d'adaptation 34 permet d'accéder à l'ensemble 36 des structures de configuration associées à un contexte applicatif choisi.

A titre d'exemple illustratif, la figure 2 illustre schématiquement deux applications logicielles, notés respectivement A₁ et A₂ et appartenant à un même contexte applicatif.

Chacune des applications logicielles A₁ et A₂ comprend l'enchaînement temporel de deux tâches logicielles, respectivement les tâches T₁ et T₂ pour A₁ et les tâches T₃ et T₄ pour A₂.

Comme expliqué ci-dessus, chaque tâche logicielle Tₖ a un niveau de priorité Prioₖ, qui est un entier compris entre 1 et N. Plus le niveau de priorité est élevé, plus une tâche logicielle est prioritaire.

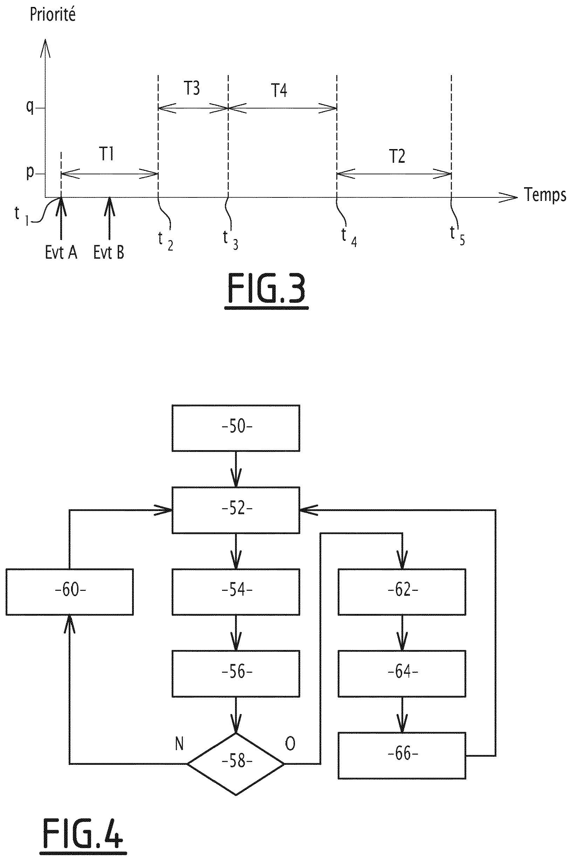

Dans cet exemple, les tâches T₁ et T₂ ont un même niveau de priorité p inférieur au niveau de priorité q des tâches T₃ et T₄, comme illustré schématiquement à la figure 3. Par exemple, l'application A₂ est un service de sécurité, par exemple une authentification d'utilisateur, alors que l'application A₁ est une application de fonctionnement de routine.

Dans un exemple de scénario, illustré schématiquement à la figure 3, deux événements, notés « Evt A » et « Evt B », surviennent successivement dans le temps. Un événement peut être matériel ou logiciel, et la survenue d'un évènement induit la mise en œuvre d'une ou plusieurs tâches. Par exemple, dans le domaine d'application de la radio logicielle, un évènement est par exemple une connexion d'utilisateur ou une demande de transmission.

Dans l'exemple illustré à la figure 3, le système 2 fonctionne dans un mode collaboratif dans lequel la survenue d'un évènement induisant l'exécution d'une tâche plus prioritaire qu'une tâche en cours d'exécution n'arrête pas immédiatement l'exécution de la tâche en cours.

L'événement « Evt A » est associé au point d'entrée de la tâche T₁, cette tâche logicielle étant exécutée à partir de l'instant temporel t₁ correspondant à la survenue de l'évènement « Evt A ». L'événement « Evt B » se produit entre les instants t₁ et t₂, l'instant temporel t₂ correspondant à un point de collaboration entre tâches, c'est-à-dire un point où la tâche T₁ est terminée ou peut être suspendue, en mode collaboratif, et les ressources sont allouées à une tâche plus prioritaire. L'événement « Evt B » induit un appel à l'application A₂, qui est prioritaire par rapport à A₁, les deux tâches logicielles T₃, T₄ ayant un niveau de priorité supérieur au niveau de priorité des tâches T₁ et T₂ de l'application A₁.

La tâche T₃ s'exécute à partir de l'instant temporel t₂, et la tâche T₄ à partir de l'instant temporel t₃, ce qui clôture l'exécution de l'application A₂, puis la deuxième tâche T₂ est exécutée entre les instants temporels t₄ et t₅, ce qui clôture l'exécution de l'application A₁.

La figure 4 est un ordinogramme des principales étapes d'un procédé de contrôle d'ordonnancement selon un mode de réalisation de l'invention.

Les étapes du procédé sont effectuées au niveau du système d'exploitation d'un dispositif de calcul électronique, en mode d'exécution privilégié.

Le procédé comprend une première étape 50, qui est une étape préalable à la mise en œuvre d'applications logicielles dans un contexte applicatif donné.

L'étape préalable 50 est une étape d'obtention et de mémorisation d'une ou plusieurs structure(s) de configuration pour chaque contexte applicatif envisagé. Lors de cette étape d'initialisation, pour un contexte applicatif donné, la liste de tâches éligibles peut être initialisée à partir d'un ensemble de tâches considérées valides dès le démarrage du système.

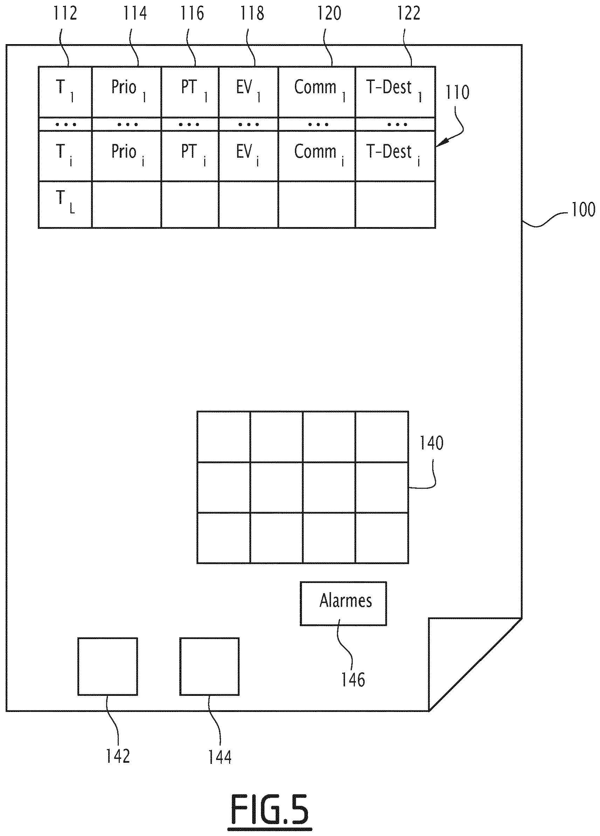

La figure 5 illustre schématiquement un exemple de structure de configuration 100 pour un contexte applicatif donné.

La structure 100 comprend plusieurs ensembles de données.

Un ensemble de données 110 mémorise les tâches logicielles identifiées par exemple par un identifiant unique de tâche noté T₁...T_{L} dans l'ensemble 110.

Par exemple, l'ensemble de données est mémorisé sous forme de tableau. Les identifiants de tâche sont mémorisés dans une première colonne 112 du tableau 110. Par exemple, chaque tâche est identifiée par un numéro de tâche.

Chaque tâche T₁ a un niveau de priorité Prioᵢ associé, parmi un nombre N maximal de niveaux de priorité, mémorisé dans une colonne 114 du tableau 110. Le niveau de priorité d'une tâche reste le même pour tout état global distingué dans le contexte applicatif.

De plus, chaque tâche Tᵢ a un point d'entrée PTᵢ associé, mémorisé dans une colonne 116 du tableau 110, et optionnellement une liste EVᵢ d'au moins un évènement déclenchant l'exécution de la tâche dans une colonne 118 du tableau 110.

De plus, pour chaque tâche Tᵢ on mémorise, dans une colonne 120 correspondante du tableau 110 une structure de communication utilisée pour communiquer vers la tâche Tᵢ.

Enfin, pour chaque tâche on mémorise les droits de communication de la tâche Tᵢ vers une ou plusieurs tâches destinatrices T-Destᵢ dans une colonne 122 du tableau 110. Par exemple, les tâches destinatrices sont identifiées par les identifiants uniques de tâche préalablement mentionnés.

Si une tâche T₁ donnée n'a pas de liste d'événements EVᵢ associée, elle deviendra éligible et donc exécutable, comme expliqué ci-après, si elle est appelée en tant que tâche destinatrice par une autre tâche.

Bien entendu, la mémorisation sous forme de tableau est donnée uniquement à titre d'exemple et toute variante à la portée de l'homme du métier, de mémorisation selon une ou plusieurs structures distinctes, est envisageable.

La structure de configuration comprend une matrice de contrôle des tâches en fonction des d'états 140, indiquant les tâches autorisées dans chaque état parmi toutes les tâches du contexte applicatif, et un graphe 142, chaque nœud du graphe correspondant à un état global, et dont les liaisons indiquent les transitions autorisées entre états.

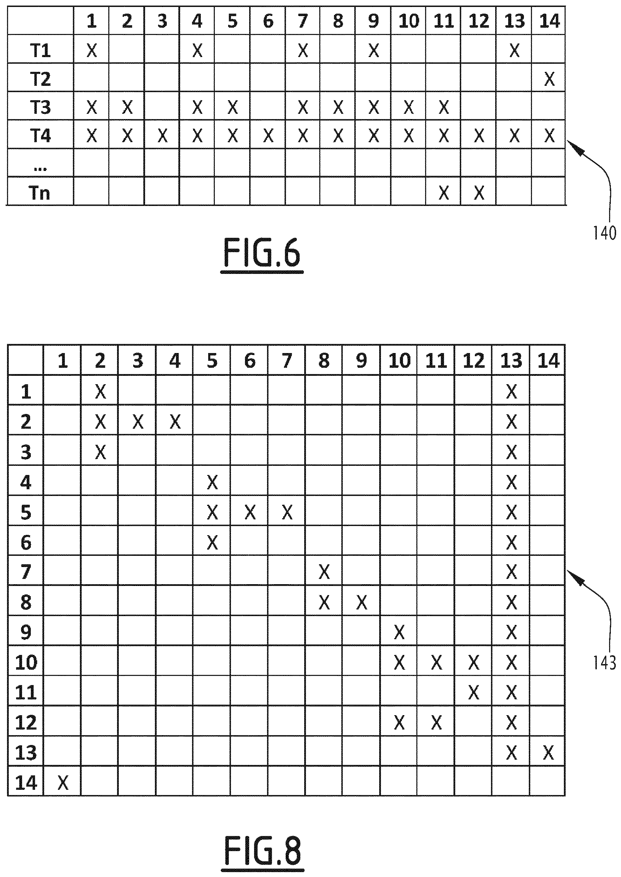

La figure 6 illustre un exemple de matrice 140, dans un contexte d'application à 14 états et n tâches, sous forme de tableau, les lignes indiquant les indices de tâche et les colonnes les indices d'état. Les croix indiquent qu'une tâche donnée est autorisée dans l'état donné, par exemple la tâche T₁ est autorisée dans les états d'indices 1, 4, 7, 9 et 13, et la tâche T₄ est autorisée dans tous les états.

Il est à noter que sur les exemples des figures 6, 7 et 8, par souci de simplification, seuls les indices associés aux états sont reportés.

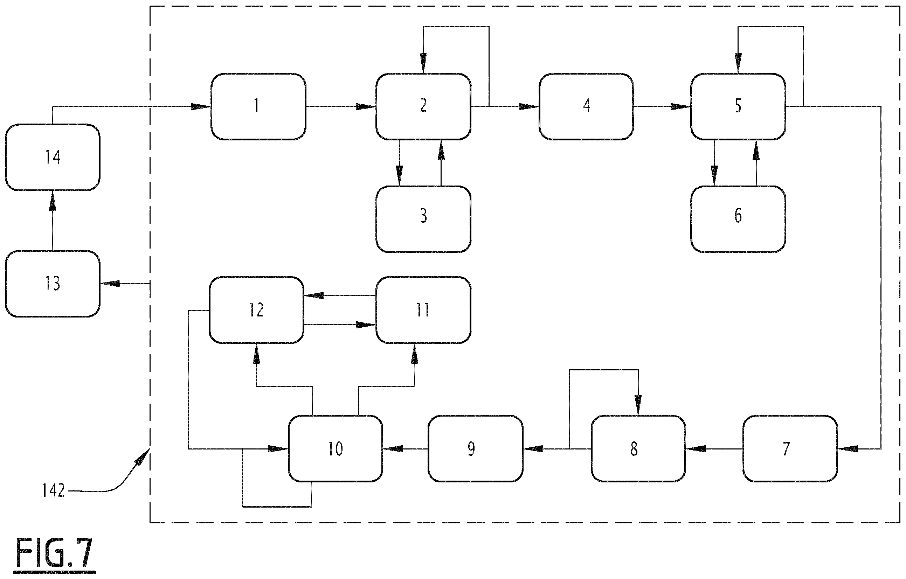

La figure 7 illustre schématiquement un graphe 142 de transition entre états, et la figure 8 illustre schématiquement une matrice 143 correspondant au graphe 142. Les croix illustrées à la figure 8 indiquent pour chaque état quels peuvent être ses successeurs. Par exemple, la première ligne de la matrice 143 indique que les successeurs de l'état d'indice 1 peuvent être respectivement l'état d'indice 2 et l'état d'indice 13.

Dans un mode de réalisation, le graphe de transition entre états est mémorisé sous la forme d'une matrice 143.

Dans un mode de réalisation, la structure de configuration identifie et mémorise (bloc 144) une unique tâche assurant le contrôle des conditions de changement de transition et autorisée à demander au système de passer d'un état courant à un état suivant.

Selon une alternative, plusieurs tâches sont autorisées à effectuer un changement entre un état courant et un état suivant, et ces tâches sont mémorisées. Ce mode alternatif est bien plus complexe car l'absence de concurrence entre les tâches autorisées à modifier l'état global doit être vérifiée.

Dans un mode de réalisation, la structure de configuration identifie et mémorise une fonction 146 de traitement d'anomalies définissant le point d'entrée des alarmes et des erreurs.

De préférence, la ou les structures de configuration enregistrées sont statiques, donc non modifiables, et mémorisées dans un espace mémoire protégé et accessible uniquement en mode d'exécution privilégié par l'intermédiaire du module de contrôle d'accès mémoire (MMU).

Avantageusement, la sécurité d'exécution des tâches est alors assurée.

De retour à la figure 4, lors d'une étape 52 de réception d'au moins un évènement à traiter, un évènement matériel ou logiciel est identifié.

Le ou chaque évènement à traiter induit un appel à l'exécution d'une ou plusieurs tâches selon les données 118 mémorisées. Ces tâches deviennent des tâches éligibles si elles sont autorisées dans l'état courant du système selon les données 140, lors de l'étape 54.

Une tâche devient éligible suite à un évènement à traiter ou si elle est appelée à s'exécuter par une tâche elle-même rendue éligible.

Une liste des tâches éligibles est maintenue à jour et mémorisée par le procédé à l'étape 54. A l'initialisation, la liste des tâches éligibles est vide, et elle est mise à jour suite à chaque réception d'événement à traiter.

Lors de l'étape 54, la liste des tâches éligibles est mise à jour en fonction du ou des évènements à traiter, les tâches éligibles étant sélectionnées parmi l'ensemble des tâches prédéfinies associées au contexte applicatif. Par exemple, les identifiants des tâches éligibles sont inscrits dans la liste des tâches éligibles, s'ils ne figurent pas déjà dans cette liste.

Chaque tâche éligible a un niveau de priorité associé, qui est extrait de la structure de configuration 100 associée au contexte logiciel courant.

L'étape 54 de mise à jour de la liste des tâches éligibles est suivie d'une étape 56 de sélection de la tâche éligible la plus prioritaire et autorisée dans l'état courant selon la structure de configuration préalablement enregistrée.

Selon une variante ou en complément, si aucun événement à traiter n'est identifié à l'étape 52, l'étape 54 n'est pas effectuée. La sélection de la tâche éligible la plus prioritaire (étape 56) autorisée dans l'état courant est effectuée selon la structure de configuration préalablement enregistrée.

A titre d'exemple, certaines tâches éligibles sont autorisées dans un état opérationnel, mais non autorisées en état de maintenance du système. En état de maintenance, seule l'authentification de l'opérateur de maintenance permet de débloquer le système.

Si plusieurs tâches éligibles ont la même priorité, elles sont de préférence traitées dans l'ordre chronologique dans lequel elles ont été inscrites dans la liste de tâches éligibles, selon le principe FIFO (pour « First-In-First-Out » en anglais). Bien entendu, tout autre type d'ordonnancement est applicable.

Les étapes de la figure 4 sont mises en œuvre par le module ordonnanceur 28 en mode d'exécution privilégié.

Il est ensuite vérifié à l'étape de vérification 58 si une tâche éligible a été sélectionnée.

En cas de réponse négative, le système 2 passe en mode veille à l'étape 60.

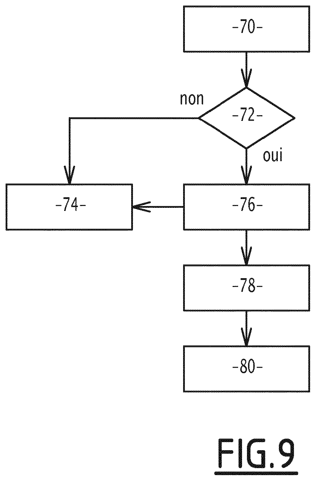

En cas de réponse positive à l'étape 58, le point d'entrée de la tâche éligible sélectionnée est appelé à l'étape 62, et la tâche éligible sélectionnée, appelée alors tâche courante Tc, s'exécute jusqu'à un point de collaboration (étape 64). La communication de la tâche courante Tc avec une tâche T-Destᵢ sera détaillée ci-après en référence à la figure 9.

Lorsque la tâche courante Tc atteint un point de collaboration, l'étape 64 est suivie de l'étape 66 à laquelle il est vérifié si la tâche courante Tc doit rester parmi les tâches éligibles, et la liste des tâches éligibles est mise à jour.

Il est également vérifié, durant l'exécution de la tâche courante Tc, si cette tâche est autorisée à demander un changement d'état global, si des conditions de transition de l'état courant vers un nouvel état sont remplies, et une demande au module 32 de changer la valeur d'identifiant de l'état courant est effectuée.

L'étape 66 est suivie de l'étape 52 et suivantes préalablement décrites.

La figure 9 est un ordinogramme des sous-étapes de l'étape 64 d'exécution d'une tâche éligible sélectionnée dans un mode de réalisation de communication entre tâches.

Les étapes du procédé sont effectuées au niveau du système d'exploitation d'un dispositif de calcul électronique, en mode d'exécution privilégié.

La tâche éligible en cours d'exécution est appelée ici tâche courante (Tc).

Lors d'une première étape 70, lorsque la tâche courante Tc demande une communication avec une tâche destinatrice T-Destᵢ, via un message ou un signal par exemple, il est vérifié à l'étape 72 si la communication demandée est autorisée avec cette tâche destinatrice T-Destᵢ. La vérification se fait par rapport aux informations mémorisées dans les données 122 de la structure de configuration mémorisée.

En cas de vérification négative, une anomalie est constatée, et l'étape 72 est suivie de l'étape 74 à laquelle la fonction de traitement d'anomalies 146 préalablement enregistrée dans la structure de configuration est appelée.

De préférence, la fonction de traitement d'anomalie génère une alarme en fonction d'un type d'anomalie constatée.

Optionnellement, un compte-rendu relatif au type d'anomalie constaté est généré.

Dans le cas où l'erreur rencontrée n'a pas été prévue ou lorsqu'aucune fonction de traitement d'anomalies 146 n'a été préalablement enregistrée, un blocage d'exécution du système est effectué, de manière à assurer la sécurité.

En cas de vérification positive à l'étape 72, cette étape est suivie d'une étape 76 de contrôle de la validité des structures de communication 120 de la structure de configuration préalablement enregistrées.

En particulier, la cohérence et la validité des structures de communication de la tâche destinatrice T-Destᵢ sont validées par rapport à leur capacité en termes de taille pour recevoir le message émis ou par rapport à leur activation préalable pour permettre la notification d'un signal.

En cas de validation négative à l'étape 76, cette étape est suivie de l'étape de traitement d'anomalie préalablement décrite.

En cas de validation positive, l'étape 76 est suivie d'une étape 78 de transfert des données à communiquer de la tâche courante vers la tâche destinatrice.

Ensuite, la liste des tâches éligibles est mise à jour à l'étape 80 avec la tâche destinatrice T-Destᵢ, qui est rajoutée à cette liste des tâches éligibles si elle ne s'y trouve pas déjà.

Le procédé de l'invention a été décrit ici dans un mode de réalisation particulier simplifié. En pratique, le nombre d'applications logicielles, de tâches et d'états pour un contexte applicatif donné est variable, donc le système est adaptatif.

En pratique, des variantes sont envisageables comme :
- l'intégration du contrôle de l'autorisation de la tâche destinatrice par rapport à l'état courant lors de la communication entre tâches ;
- l'intégration du contrôle de l'ordonnancement dans un dispositif de calcul comprenant plusieurs unités de traitements (un système multiprocesseur ou multi-cœur) avec plusieurs tâches courantes simultanément.

Avantageusement, l'ordonnancement et l'exécution des tâches logicielles sont contrôlés, de manière sécurisée dans la mesure où :
- la structure de configuration est enregistrée dans une portion de mémoire protégée et non accessible en mode non privilégié, donc protégée du piratage à partir des tâches applicatives ;
- l'ordonnancement des tâches est assujetti à un contrôle d'état global dont la modification est elle-même contrôlée par le noyau du système d'exploitation ;
- la communication entre les tâches est également contrôlée par le noyau du système d'exploitation.

Les étapes du procédé sont effectuées au niveau du système d'exploitation d'un dispositif de calcul électronique, en mode d'exécution privilégié.

La tâche éligible en cours d'exécution est appelée ici tâche courante (Tc).

Lors d'une première étape 70, lorsque la tâche courante Tc demande une communication avec une tâche destinatrice T-Destᵢ, via un message ou un signal par exemple, il est vérifié à l'étape 72 si la communication demandée est autorisée avec cette tâche destinatrice T-Destᵢ. La vérification se fait par rapport aux informations mémorisées dans les données 122 de la structure de configuration mémorisée.

En cas de vérification négative, une anomalie est constatée, et l'étape 72 est suivie de l'étape 74 à laquelle la fonction de traitement d'anomalies 146 préalablement enregistrée dans la structure de configuration est appelée.

De préférence, la fonction de traitement d'anomalie génère une alarme en fonction d'un type d'anomalie constatée.

Optionnellement, un compte-rendu relatif au type d'anomalie constaté est généré.

Dans le cas où l'erreur rencontrée n'a pas été prévue ou lorsqu'aucune fonction de traitement d'anomalies 146 n'a été préalablement enregistrée, un blocage d'exécution du système est effectué, de manière à assurer la sécurité.

En cas de vérification positive à l'étape 72, cette étape est suivie d'une étape 76 de contrôle de la validité des structures de communication 120 de la structure de configuration préalablement enregistrées.

En particulier, la cohérence et la validité des structures de communication de la tâche destinatrice T-Destᵢ sont validées par rapport à leur capacité en termes de taille pour recevoir le message émis ou par rapport à leur activation préalable pour permettre la notification d'un signal.

En cas de validation négative à l'étape 76, cette étape est suivie de l'étape de traitement d'anomalie préalablement décrite.

En cas de validation positive, l'étape 76 est suivie d'une étape 78 de transfert des données à communiquer de la tâche courante vers la tâche destinatrice.

Ensuite, la liste des tâches éligibles est mise à jour à l'étape 80 avec la tâche destinatrice T-Destᵢ, qui est rajoutée à cette liste des tâches éligibles si elle ne s'y trouve pas déjà.

Le procédé de l'invention a été décrit ici dans un mode de réalisation particulier simplifié. En pratique, le nombre d'applications logicielles, de tâches et d'états pour un contexte applicatif donné est variable, donc le système est adaptatif.

En pratique, des variantes sont envisageables comme :
- l'intégration du contrôle de l'autorisation de la tâche destinatrice par rapport à l'état courant lors de la communication entre tâches ;
- l'intégration du contrôle de l'ordonnancement dans un dispositif de calcul comprenant plusieurs unités de traitements (un système multiprocesseur ou multi-cœur) avec plusieurs tâches courantes simultanément.

Avantageusement, l'ordonnancement et l'exécution des tâches logicielles sont contrôlés, de manière sécurisée dans la mesure où :
- la structure de configuration est enregistrée dans une portion de mémoire protégée et non accessible en mode non privilégié, donc protégée du piratage à partir des tâches applicatives ;
- l'ordonnancement des tâches est assujetti à un contrôle d'état global dont la modification est elle-même contrôlée par le noyau du système d'exploitation ;
- la communication entre les tâches est également contrôlée par le noyau du système d'exploitation.

## Revendications

1. Procédé de contrôle d'ordonnancement de tâches logicielles à exécuter dans un contexte applicatif prédéterminé, les tâches logicielles (26a,..., 26z) étant adaptées à être mises en œuvre par un dispositif de calcul en mode d'exécution non privilégié, le dispositif de calcul comportant des ressources matérielles (14a-20a) gérées par un système d'exploitation (8) à noyau (10) exécutable en mode d'exécution privilégié, le procédé étant mis en œuvre par ledit noyau (10) du système d'exploitation et effectuant ur ordonnancement de tâches logicielles à exécuter utilisant une structure de configuration (36, 100) préalablement mémorisée (50), ladite structure de configuration comportant, pour ledit contexte applicatif donné, au moins un niveau de priorité (114) associé à chaque tâche logicielle dudit contexte applicatif,
**caractérisé en ce que** ladite structure de configuration comporte en outre pour chaque tâche logicielle dudit contexte applicatif, une information (122) relative aux communications autorisées de ladite tâche vers une ou plusieurs tâches logicielles destinatrices, et pour ledit contexte applicatif donné, un ensemble d'états globaux, avec pour chaque état global, une indication (140) de tâches autorisées dans ledit état, et une indication (142, 143) de transitions autorisées entre états globaux, le procédé comportant des étapes de:
- réception (52) d'au moins un évènement à traiter,
- identification (54) d'au moins une tâche logicielle éligible, à exécuter suite audit au moins un évènement à traiter, une tâche éligible étant une tâche autorisée dans un état global courant selon ladite indication (140) de tâches autorisées,
- ordonnancement (54) des tâches éligibles en fonction du niveau de priorité associé à chaque tâche éligible, et
- sélection (56) de la tâche éligible listée dans une liste de tâches éligibles, de priorité la plus élevée et autorisée dans l'état global courant.

2. Procédé de contrôle selon la revendication 1 dans lequel ladite structure de configuration est enregistrée préalablement à l'exécution d'une quelconque desdites tâches logicielles, ledit enregistrement étant non modifiable.

3. Procédé de contrôle selon l'une quelconque des revendications 1 ou 2, comportant des étapes de :
pour une tâche éligible sélectionnée, vérification (72) d'autorisation de communication préalablement mémorisée pour ladite tâche éligible sélectionnée, et
en l'absence d'autorisation, exécution (74) d'une fonction de traitement d'anomalies préalablement enregistrée dans ladite structure de configuration et/ou un blocage de l'exécution de ladite tâche éligible sélectionnée, et
en cas de vérification (72) d'autorisation positive, validation (76) par vérification de la structure de configuration mémorisée, d'une tâche destinatrice sélectionnée, et communication (78) de données vers la tâche destinatrice.

4. Procédé selon l'une des revendications 1 à 3, dans lequel ladite structure de configuration comprend également, pour au moins une partie des tâches, une liste (EVᵢ) d'au moins un évènement déclenchant ladite tâche, et dans lequel l'identification (54) d'au moins une tâche logicielle éligible utilise ladite structure de configuration.

5. Procédé selon l'une des revendications 1 à 4, dans lequel, dans l'étape d'ordonnancement des tâches éligibles, lorsque plusieurs tâches ont un même niveau de priorité, elles sont ordonnancées selon un ordre chronologique d'exécution.

6. Procédé de contrôle selon l'une quelconque des revendications 1 à 5, comprenant, suite à l'exécution d'une tâche éligible sélectionnée, une mise à jour (80) de la liste des tâches éligibles.

7. Système de contrôle d'ordonnancement de tâches logicielles à exécuter dans un contexte applicatif prédéterminé, comportant un dispositif de calcul, les tâches logicielles étant adaptées à être mises en œuvre par ledit dispositif de calcul en mode d'exécution non privilégié,
le dispositif de calcul comportant des ressources matérielles (14a-20a) gérées par un système d'exploitation (8) à noyau (10) exécutable en mode d'exécution privilégié,
le noyau (10) du système d'exploitation (8) étant configuré pour effectuer un ordonnancement de tâches logicielles à exécuter utilisant une structure de configuration (36, 100) préalablement mémorisée par ledit dispositif de calcul et comportant, pour ledit contexte applicatif donné, au moins un niveau de priorité (114) associé à chaque tâche logicielle dudit contexte applicatif,
le système étant **caractérisé en ce que** la structure de configuration comporte en outre, pour chaque tâche logicielle dudit contexte applicatif, une information (120) relative aux communications autorisées de ladite tâche vers une ou plusieurs tâches logicielles destinatrices, et
pour ledit contexte applicatif donné, un ensemble d'états globaux, avec pour chaque état global, une indication (140) de tâches autorisées dans ledit état, et une indication (142, 143) de transitions autorisées entre états globaux,
le noyau (10) du système d'exploitation (8) étant configuré pour effectuer :
- une réception d'au moins un évènement à traiter,
- une identification d'au moins une tâche logicielle éligible, à exécuter suite audit au moins un évènement à traiter, une tâche éligible étant une tâche autorisée dans un état global courant du système selon ladite indication (140) de tâches autorisées,
- un ordonnancement des tâches éligibles en fonction du niveau de priorité associé à chaque tâche éligible, et
- une sélection de la tâche éligible listée dans une liste de tâches éligibles, de priorité la plus élevée et autorisée dans l'état global courant.

8. Système de contrôle selon la revendication 7, dans lequel ladite structure de configuration est enregistrée préalablement à l'exécution d'une quelconque desdites tâches logicielles, dans une portion de mémoire protégée et non accessible.

9. Système de contrôle selon l'une des revendications 7 ou 8, comportant une pluralité de structures de configuration mémorisées, chaque structure de configuration correspondant à un contexte applicatif.

## Patentansprüche

1. Steuerverfahren eines Ordnens von Software-Aufgaben, die in einem vorbestimmten Anwendungskontext ausgeführt werden sollen, wobei die Software-Aufgaben (26a, ..., 26z) angepasst sind, um von einer Rechenvorrichtung in einem nicht privilegierten Ausführungsmodus implementiert zu werden, die Rechenvorrichtung umfassend Hardware-Ressourcen (14a-20a), die von einem Betriebssystem (8) mit einem Kernel (10) verwaltet werden, der in einem privilegierten Ausführungsmodus ausführbar ist,
wobei das Verfahren durch das Kernel (10) des Betriebssystems implementiert wird und ein Ordnen von auszuführenden Software-Aufgaben unter Verwendung einer zuvor gespeicherten (50) Konfigurationsstruktur (36, 100) ausführt, die Konfigurationsstruktur umfassend für den gegebenen Anwendungskontext mindestens eine Prioritätsstufe (114), die mit jeder Software-Aufgabe des Anwendungskontexts assoziiert ist,
**dadurch gekennzeichnet, dass** die Konfigurationsstruktur ferner für jede Software-Aufgabe des Anwendungskontexts Informationen (122) in Bezug auf die erlaubten Kommunikationen der Aufgabe zu einer oder mehreren Ziel-Software-Aufgaben und für den gegebenen Anwendungskontext eine Menge von globalen Zuständen umfasst, und für jeden globalen Zustand eine Angabe (140) von in dem Zustand erlaubten Aufgaben und eine Angabe (142, 143) von erlaubten Übergängen zwischen globalen Zuständen vorliegt, das Verfahren umfassend die folgenden Schritte:
- Empfangen (52) von mindestens einem zu verarbeitenden Ereignis,
- Identifizieren
(54) von mindestens einer in Frage kommenden Software-Aufgabe, die nach dem mindestens ein zu verarbeitendes Ereignis auszuführen ist, wobei eine in Frage kommende Aufgabe eine Aufgabe ist, die in einem aktuellen globalen Zustand gemäß der Angabe (140) für zulässige Aufgaben zulässig ist,
- Ordnen
(54) der in Frage kommenden Aufgaben entsprechend der mit jeder in Frage kommenden Aufgabe verbundenen Prioritätsstufe, und
- Auswählen
(56) der in Frage kommenden Aufgabe, die in einer Liste der in Frage kommenden Aufgaben aufgeführt ist, die höchste Priorität aufweist und in dem aktuellen globalen Status zulässig ist.

2. Steuerverfahren nach Anspruch 1, wobei die Konfigurationsstruktur vor der Ausführung einer beliebigen der Software-Aufgaben aufgezeichnet wird, wobei die Aufzeichnung nicht veränderbar ist.

3. Steuerverfahren nach einem der Ansprüche 1 oder 2, umfassend die folgenden Schritte:
für eine ausgewählte in Frage kommende Aufgabe, Überprüfen (72) der zuvor gespeicherten Kommunikationsberechtigung für die ausgewählte in Frage kommende Aufgabe, und
bei fehlender Autorisierung, Ausführen (74) einer zuvor in der Konfigurationsstruktur gespeicherten Anomaliebehandlungsfunktion und/oder Blockieren der Ausführung der ausgewählten in Frage kommenden Aufgabe, und
bei positiver Autorisierungsprüfung (72), Validieren (76) durch Überprüfung der gespeicherten Konfigurationsstruktur einer ausgewählten Zielaufgabe und Übermittlung (78) von Daten an die Zielaufgabe.

4. Verfahren nach einem der Ansprüche 1 bis 3, wobei die Konfigurationsstruktur für mindestens einen Teil der Aufgaben auch eine Liste (EV) von mindestens einem Ereignis umfasst, das die Aufgabe auslöst, und wobei ein Identifizieren (54) mindestens einer in Frage kommenden Software-Aufgabe die Konfigurationsstruktur verwendet.

5. Verfahren nach einem der Ansprüche 1 bis 4, wobei im Schritt des Ordnens der in Frage kommenden Aufgaben, wenn mehrere Aufgaben die gleiche Prioritätsstufe aufweisen, diese in einer chronologischen Reihenfolge ihrer Ausführung geordnet werden.

6. - Prüfverfahren nach einem der Ansprüche 1 bis 5, umfassend, nach der Ausführung einer ausgewählten in Frage kommenden Aufgabe, eine Aktualisierung (80) der Liste der in Frage kommenden Aufgaben.

7. Steuerverfahren eines Ordnens von Software-Aufgaben, die in einem vorbestimmten Anwendungskontext ausgeführt werden sollen, umfassend eine Rechenvorrichtung, wobei die Software-Aufgaben angepasst sind, um von der Rechenvorrichtung in einem nicht privilegierten Ausführungsmodus implementiert zu werden,
die Rechenvorrichtung umfassend Hardware-Ressourcen (14a-20a), die von einem Betriebssystem (8) mit einem Kernel (10) verwaltet werden, der in einem privilegierten Ausführungsmodus ausführbar ist,
wobei das Kernel (10) des Betriebssystems (8) konfiguriert ist, um ein Ordnen von auszuführenden Software-Aufgaben unter Verwendung einer Konfigurationsstruktur (36, 100) vorzunehmen, die zuvor von der Rechenvorrichtung gespeichert wurde und für den gegebenen Anwendungskontext mindestens eine Prioritätsstufe (114) umfasst, die mit jeder Software-Aufgabe des Anwendungskontexts assoziiert ist,
wobei das System **dadurch gekennzeichnet ist, dass** die Konfigurationsstruktur ferner für jede Software-Aufgabe des Anwendungskontextes Informationen (120) über die erlaubte Kommunikation von der Aufgabe zu einer oder mehreren Empfänger-Software-Aufgaben umfasst, und
für den gegebenen Anwendungskontext eine Menge von globalen Zuständen, wobei für jeden globalen Zustand eine Angabe (140) von Aufgaben, die in diesem Zustand erlaubt sind, und eine Angabe (142, 143) von erlaubten Übergängen zwischen globalen Zuständen,
wobei das Kernel (10) des Betriebssystems (8) zu Folgendem konfiguriert ist:
- Empfangen von mindestens einem zu verarbeitenden Ereignis,
- Identifizieren von mindestens einer in Frage kommenden Software-Aufgabe, die nach dem mindestens ein zu verarbeitendes Ereignis auszuführen ist, wobei eine in Frage kommende Aufgabe eine Aufgabe ist, die in einem aktuellen globalen Zustand des Systems gemäß der Angabe (140) für zulässige Aufgaben zulässig ist,
- Ordnen
der in Frage kommenden Aufgaben entsprechend der mit jeder in Frage kommenden Aufgabe verbundenen Prioritätsstufe, und
- Auswählen
der in Frage kommenden Aufgabe, die in einer Liste der in Frage kommenden Aufgaben aufgeführt ist, die höchste Priorität aufweist und in dem aktuellen globalen Status zulässig ist.

8. Steuersystem nach Anspruch 7, wobei die Konfigurationsstruktur vor der Ausführung einer beliebigen der Software-Aufgaben in einem geschützten und nicht zugänglichen Speicherabschnitt gespeichert wird.

9. Steuersystem nach einem der Ansprüche 7 oder 8, umfassend eine Vielzahl von gespeicherten Konfigurationsstrukturen, wobei jede Konfigurationsstruktur einem Anwendungskontext entspricht.

## Claims

1. - A method of controlling the scheduling of software tasks to be executed in a predetermined application context, the software tasks (26a, ..., 26z) being adapted to be implemented by a computing device in a non-privileged execution mode, the computing device comprising hardware resources (14a-20a) managed by an operating system (8) with a kernel (10) executable in privileged execution mode,
the method being implemented by said kernel (10) of the operating system and performing a scheduling of software tasks to be executed using a previously stored (50) configuration structure (36, 100), said configuration structure comprising, for said given application context, at least one priority level (114) associated with each software task of said application context,
**characterized in that** said configuration structure further comprises for each software task of said application context, information (122) relating to authorised communications from said task to one or more destination software tasks, and for said given application context, a set of global states, with for each global state, an indication (140) of tasks authorized in said state, and an indication (142, 143) of authorized transitions between global states, the method comprising steps of:
- receiving (52) at least one event to be processed,
- identifying
(54) at least one eligible software task, to be executed following said at least one event to be processed, an eligible task being an authorized task in a current global state according to said indication (140) of authorized tasks,
- scheduling
(54) eligible tasks according to the priority level associated with each eligible task, and
- selecting
(56) the eligible task listed in a list of eligible tasks, of the highest priority and authorized in the current global state.

2. - The control method according to claim 1, wherein said configuration structure is stored prior to the execution of any of said software tasks, said storage being unmodifiable.

3. - The control method according to any of claims 1 to 2, further comprising the following steps:
for a selected eligible task, checking (72) previously stored communication authorization for said selected eligible task, and
in the absence of authorization, executing (74) a fault handling function previously stored in said configuration structure and/or blocking the execution of said selected eligible task, and
in the event of a positive authorization check (72), validating (76) a selected destination task by checking the stored configuration structure and communication (78) of data to the destination task.

4. - The method according to any of claims 1 to 3, wherein said configuration structure further comprises, for at least some of the tasks, a list (EV) of at least one event triggering said task, and wherein the identification (54) of at least one eligible software task uses said configuration structure.

5. - The method according to any of claims 1 to 4, wherein in the step of scheduling eligible tasks, when several tasks have the same priority level, they are scheduled according to a chronological order of execution.

6. - The control method according to any one of claims 1 to 5, comprising, following the execution of a selected eligible task, an update (80) of the list of eligible tasks.

7. - A system for controlling the scheduling of software tasks to be executed in a predetermined application context, comprising a computing device, the software tasks being adapted to be implemented by said computing device in a non-preferred execution mode,
the computing device comprising hardware resources (14a-20a) managed by an operating system (8) with a kernel (10) executable in a privileged execution mode,
the kernel (10) of the operating system (8) being configured to carry out a scheduling of software tasks to be executed using a configuration structure (36, 100) previously stored by said computing device and comprising, for said given application context, at least one priority level (114) associated with each software task of said application context,
the system being **characterized in that** the configuration structure further comprises, for each software task of said application context, information (120) relating to the permitted communications from said task to one or more destination software tasks, and
for said given application context, a set of global states, with for each global state, an indication (140) of tasks allowed in said state, and an indication (142, 143) of transitions allowed between global states,
the kernel (10) of the operating system (8) being configured to perform:
- a receipt of at least one event to be processed,
- an identification (54) of at least one eligible software task, to be executed following said at least one event to be processed, an eligible task being an authorized task in a current global state of the system according to said indication (140) of authorized tasks,
- a
scheduling of eligible tasks according to the priority level associated with each eligible task, and
- a
selecting of the eligible task listed in a list of eligible tasks, of the highest priority and authorized in the current global state.

8. - The control system according to claim 7, wherein said configuration structure is stored prior to the execution of any of said software tasks, in a protected and non-accessible portion of memory.

9. - The control system according to any of claims 7 or 8, comprising a plurality of stored configuration structures, each configuration structure corresponding to an application context.
